(19) Europäisches Patentamt / European Patent Office / Office européen des brevets

(11) **EP 2 484 479 A1**

(12) **EUROPEAN PATENT APPLICATION**
published in accordance with Art. 153(4) EPC

(43) Date of publication:
**08.08.2012 Bulletin 2012/32**

(51) Int Cl.:
*B23K 31/00* (2006.01)    *B23K 9/00* (2006.01)
*B23K 9/028* (2006.01)    *B23K 9/04* (2006.01)
*B23K 9/095* (2006.01)    *B23K 33/00* (2006.01)
*G21C 13/00* (2006.01)    *G21C 19/02* (2006.01)

(21) Application number: **10820216.9**

(22) Date of filing: **10.06.2010**

(86) International application number:
**PCT/JP2010/059872**

(87) International publication number:
**WO 2011/040096 (07.04.2011 Gazette 2011/14)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **30.09.2009 JP 2009228594**

(71) Applicant: **Mitsubishi Heavy Industries, Ltd. Tokyo 108-8215 (JP)**

(72) Inventors:
• **KAMO, Kazuhiko**
  **Tokyo 108-8215 (JP)**
• **NARITA, Ryuichi**
  **Tokyo 108-8215 (JP)**
• **HORI, Nobuyuki**
  **Tokyo 108-8215 (JP)**

(74) Representative: **HOFFMANN EITLE Patent- und Rechtsanwälte Arabellastrasse 4 81925 München (DE)**

(54) **NOZZLE WELDING METHOD, NOZZLE PART REPAIRING METHOD, AND NOZZLE WELDED STRUCTURE**

(57)    To provide nozzle welding method which can be performed automatically and efficiently, and which can also be performed under the condition of a high-exposure amount. The nozzle welding method includes: a built-up groove forming process of forming a built-up groove portion (21) by digging an inner surface (19) of a vessel into a substantially cylindrical shape in a range including at least a J-groove (27); a build-up welding process of forming a built-up weld portion in the built-up groove portion (21) by build-up welding in such a manner that a plug (31) is configured by a plug main body portion (33) having an inner end surface (37) forming an extending portion of the outer surface (29) of the built-up groove portion (21), and is also configured by a projecting portion (35) projected from the inner end surface (37) and having an axis center substantially coincident with the axis center of the build-up groove portion (21), and the plug (31) is inserted into a nozzle hole (13) so as to make the inner end surface (37) substantially coincident with the outer surface (29) of the built-up groove portion (21); a vessel side weld groove portion forming process of forming the J-groove (27) in the build-up weld portion; and a nozzle attaching process of completing the J-groove (27) portion by inserting the nozzle and welding the J-groove (27) portion.

FIG. 2

**Description**

{Technical Field}

The present invention relates to a nozzle welding method, a nozzle portion repair method, and a nozzle welded structure.

{Background Art}

It is known that, among nuclear reactors, the light water reactor is classified into the boiling water reactor (BWR) and the pressurized water reactor (PWR).
In the boiling water reactor, steam is generated through a reactor vessel in which nuclear fuel serving as a heat source is stored, and the steam is utilized to drive a steam turbine, so that electric power is generated. In this case, the utilized steam is generated from water containing radioactive materials, and hence needs to be severely managed when passing through the steam turbine or a condenser.
Further, in the pressurized water reactor, primary system water is converted into high temperature and high pressure water through a reactor vessel and a pressurizer, so as to be introduced into a vapor generator. Secondary system water is converted into steam by heat exchange with the primary system water introduced into the vapor generator. The generated steam drives a steam turbine provided in the secondary system, so that electric power is generated. The pressurized water reactor has a structure in which water containing the radioactive materials is prevented from passing through the steam turbine and the condenser. Thus, the maintenability of the power generation portion, such as the steam turbine, in the pressurized water reactor is more improved as compared with the boiling water reactor.
In order to control the output of the nuclear reactor, it is necessary to control the reactivity by adjusting the number of neutrons in the nuclear reactor. Thus, the nuclear reactor in the shutdown state is controlled so that control rods made of a control material absorbing neutrons are inserted into the nuclear reactor to absorb neutrons generated by the nuclear fission reaction and thereby the nuclear reactor is prevented from becoming the critical state.
Further, when the nuclear reactor is started, the control rods are gradually drawn out to increase the number of neutrons in the reactor, so that the reactivity is raised until the rated output power is obtained. Also, in an emergency, an operation that all the control rods are inserted to shut down the nuclear reactor is performed.
Here, for example, a control rod drive apparatus for driving the control rod, and the like, is attached to a nozzle provided at a lower portion (lower hemispherical mirror) of the reactor vessel in the case of the boiling water reactor, or is attached to a nozzle provided at an upper portion (upper hemispherical mirror) of the reactor vessel in the case of the pressurized water reactor (see Patent Literature 1 and Patent Literature 2).
The nozzle is mainly formed of stainless steel, a Ni-based alloy, and the like. The nozzle is configured to penetrate through the hemispherical mirror of the reactor vessel made of, for example, carbon steel, or low alloy steel and is attached to the hemispherical mirror by welding.
At this time, in order to prevent deterioration of strength and corrosion resistance due to the heat treatment after welding, build-up welding using stainless steel or a Ni-based alloy material is performed on the side of the hemispherical mirror. After the heat-treatment of the build-up weld portion is performed, a J-groove is formed in the build-up weld portion. The nozzle is inserted in the J-groove, and a J-weld portion is formed by welding, so that the nozzle is attached to the hemispherical mirror (see Patent Literature 2).
Other than the above-described nozzle, there are, for example, a reactor vessel inlet/outlet nozzle and a thermometer attaching nozzle which are attached to the reactor vessel, a safety valve nozzle attached to the pressurizer, a steam generator inlet/outlet nozzle attached to the steam generator, and the like.
When stainless steel and a Ni-based alloy are placed in a corrosive environment (in the state of existence of high temperature and high pressure water used as nuclear reactor coolant and acting as a corrosive agent) under application of tensile stress, stress corrosion cracking (SCC) and primary water stress corrosion cracking (PWSCC) occur in the stainless steel and the Ni-based alloy, and hence the nozzle or a portion near the nozzle attaching portion may be damaged.
When damage is caused at the nozzle or near the nozzle attaching portion, it is necessary to exchange the nozzle or to seal weld the periphery of the nozzle attaching potion by using a weld material having excellent corrosion resistance. The seal welding is a repair method for isolating the stress corrosion cracking from the primary water and thereby preventing further development of the stress corrosion cracking. Further, in some cases, before stress corrosion cracking occurs, seal welding is performed as a form of preventive maintenance in order to isolate the periphery of the nozzle attaching potion from the primary water by using a weld metal having excellent corrosion resistance.
About the repair method, various methods have been proposed, for example, as described in Patent Literature 1 and Patent Literature 2.

{Citation List}

{Patent Literature}

{PTL 1} Japanese Unexamined Patent Application, Publication No. Hei 2-102492
{PTL 2} Japanese Unexamined Patent Application, Publication No. 2007-232457

{Summary of Invention}

{Technical Problem}

Meanwhile, in the conventional method, for example, when the attaching position of the nozzle is located at an inclined portion, the shape of the build-up weld portion becomes a complicated three-dimensional saddle shape. Thus, the welding is difficult to be performed by automatic welding machinery and hence is manually performed by a skilled welder.
Further, the J-weld portion also includes a three-dimensional weld line having different cross sectional shapes depending on the welding positions along the peripheral direction, and hence the welding in the J-weld portion is difficult to be performed by automatic welding machinery and is manually performed by a skilled welder.

In the case of new manufacture, the welding can be performed by a skilled welder. However, for example, when during operation, damage is caused in the nuclear vessel and thereby the nozzle is exchanged, the welding work is performed under the condition of a high-exposure amount and hence needs to be performed by remote automatic welding machinery. However, in the present nozzle welded structure, it is difficult to perform the welding work by the remote automatic welding machinery.

When damage is caused after operation or when damage may be caused after operation, there is, for example, a case where a repair weld bead is formed on the J-weld portion. In this case, since the shape of the weld portion becomes a three-dimensional saddle shape, and since the width of repair welding is different at positions where the repair welding is performed, the number of weld beads is different at each welding position. Therefore, it is difficult to perform the welding work by automatic welding machinery.

The present invention has been made in view of the above described circumstances. An object of the present invention is to provide a nozzle welding method, a nozzle portion repair method, and a nozzle welded structure, in each of which the welding work can be performed automatically and efficiently, and can also be performed under the condition of a high-exposure amount.

{Solution to Problem}

In order to solve the above-described problems, the present invention adopts the following solutions.
That is, a first aspect of the present invention provides a nozzle welding method in which a nozzle inserted into a nozzle hole provided in a vessel portion is joined to the vessel portion by welding a weld groove portion formed between the inner surface portion of the vessel portion and the nozzle, the nozzle welding method including: a built-up groove forming process of forming a built-up groove portion by digging the inner surface portion of the vessel portion into a substantially cylindrical shape in a range including at least the weld groove portion; a build-up welding process of forming a built-up weld portion in the built-up groove portion by build-up welding in such a manner that a plug is configured by a substantially cylindrically-shaped main body having an inner end surface forming an extending portion of the outer end surface of the built-up groove portion, and an outer diameter substantially equal to the inner diameter of the nozzle hole, and is also configured by a substantially cylindrically-shaped projecting portion projected from the inner end surface and having an axis center substantially coincident with the axis center of the build-up weld portion, and the plug is inserted into the nozzle hole so as to make the inner end surface substantially coincident with the outer end surface of the built-up groove portion; a vessel side weld groove portion forming process of forming, in the build-up weld portion, the weld groove portion on the side of the vessel; and a nozzle attaching process of completing the weld groove portion by inserting the nozzle and welding the weld groove portion.

According to the first aspect, the plug, which has the substantially cylindrically shaped projecting portion having the axis center substantially coincident with the axis center of the build-up weld portion, is inserted into the nozzle hole so as to make the inner end surface of the plug substantially coincident with the outer end surface of the built-up groove portion, and the build-up welding is performed at the built-sup groove portion. Thus, the inner end surface of the plug and the outer end surface of the built-up groove portion form a continuous surface. In other words, the nozzle hole, which exists in the built-up groove portion, is filled with the inner end surface of the plug, and hence no space, in which the build-up welding cannot be performed, exists in the built-up groove portion. Therefore, the build-up welding can be continuously performed without being interrupted. For example, the build-up welding can be continuously performed in such a manner that, while the welding torch is rotated about the projecting portion of the plug, the distance between the welding torch and the axis center of the projecting portion is changed.

In the built-up groove portion, the inner surface portion of the vessel portion is dug and formed into a substantially cylindrical shape in a range including at least the weld groove portion, and hence the build-up welding can be performed under fixed welding conditions and at a fixed distance from the axis center of the substantially cylindrical shape.

At this time, for example, when the welding is performed by rotating the welding torch, the welding is difficult to be performed, or cannot be performed at the axis center portion of the built-up groove portion. However, the projecting portion of the plug is located at the axis center portion, and hence the axis center portion need not be welded.

Thereby, the welding of the build-up weld portion can be performed automatically and efficiently, and can also be performed under the condition of a high-exposure amount.

Note that the plug and a part of the build-up weld portion are removed when the vessel side weld groove portion is formed. Thus, it is preferred that the projecting portion of the plug is located on the side of the nozzle hole and away from the position of the weld groove portion. Further, it is more preferred that the projecting portion of the plug is provided on the inner side of the nozzle hole.

Further, it is preferred that, after the build-up welding process is completed, whether or not a defect exists in the build-up weld portion is checked by a non-destructive test, such as an ultrasonic flaw detection test (UT).

In the first aspect, it is preferred that the projecting portion is formed into a tapered shape and that the connecting portion between the projecting portion and the inner end surface is rounded.

With this configuration, the surface shape is changed smoothly and contiguously from the inner end surface to the projecting portion, and hence occurrence of a welding defect can be suppressed. Thereby, it is possible to suppress occurrence of a welding defect in the build-up weld portion, even when the projecting portion is located, for example, at the edge portion of the inner end surface.

In the first aspect, the weld groove portion may also be configured as an I-shaped groove having oblique mating surfaces.

With this configuration, the nozzle can be joined to the build-up weld portion by welding from the extending direction of the I-shaped groove, and hence automatic welding can be easily applied.

Note that, in this case, it is preferred to perform deep penetration welding that is high energy density welding, such as the laser beam welding or the electron beam welding.

In the above-described configuration, it is preferred that the I-shaped groove is formed so that, over the entire periphery of the I-shaped groove, the distance between the peripheral end portion of the I-shaped groove and the axis center of the nozzle hole is substantially fixed, and the groove angle of the 1-shape groove is also substantially fixed.

In this way, the I-shaped groove is formed so that, over the entire periphery of the I-shaped groove, the distance between the peripheral end portion of the I-shaped groove and the axis center of the nozzle hole is substantially fixed, and the groove angle of the I-shaped groove is also substantially fixed. Thus, the depth of the I-shaped groove is substantially fixed. Thereby, the energy required for the welding can be substantially fixed around the entire periphery of the I-shaped groove. Further, for example, when the welding torch is rotated around the axis center of the nozzle, the angle of the welding torch and the distance between the welding torch and the I-shaped groove need not be adjusted, and hence automatic welding can be easily applied.

A second aspect of the present invention provides a nozzle portion repair method for exchanging a nozzle in a nozzle portion in which the nozzle is inserted into a nozzle hole provided in a vessel portion holding a liquid therein and is joined to the vessel portion by welding a weld groove portion formed between the inner surface portion of the vessel portion and the nozzle, the nozzle portion repair method including: a pipe removing process of sealing the inner end portion of the nozzle and removing a pipe connected to the nozzle outside the vessel; an outer cover process of attaching an outer cover to the outer surface portion of the vessel so as to cover the outer end portion of the nozzle; a built-up groove forming process of removing the nozzle and forming a built-up groove portion by digging the inner surface portion of the vessel portion in a substantially cylindrical shape in a range including at least the weld groove portion; an inner cover process of attaching an inner cover to the inner surface portion of the vessel so as to cover the inner end portion of the nozzle and the built-up groove portion, and bringing the inside of the inner cover into a gaseous environment; a build-up welding process of forming a built-up weld portion in the built-up groove portion by build-up welding in such a manner that a plug is configured by a substantially cylindrically-shaped main body having an inner end surface forming an extending portion of the outer end surface of the built-up groove portion, and an outer diameter substantially equal to the inner diameter of the nozzle hole, and is also configured by a substantially cylindrically-shaped projecting portion projected from the inner end surface and having an axis center substantially coincident with the axis center of the build-up weld portion, and the plug is inserted into the nozzle hole so as to make the inner end surface substantially coincident with the outer end surface of the built-up groove portion; a vessel side weld groove portion forming process of forming, in the build-up weld portion, the weld groove portion on the side of the vessel; a nozzle attaching process of completing the weld groove portion by inserting the nozzle and welding the weld groove portion; and a pipe attaching process of sealing the inner end portion of the newly attached nozzle, and attaching and connecting a pipe to the newly attached nozzle outside the vessel.

According to the second aspect, in the pipe removing process, since the inner end portion of the nozzle is sealed and then the pipe connected to the nozzle is removed outside the vessel, the pipe can be removed without being influenced by the liquid held in the vessel.

Then, the outer cover is attached to the outer surface portion of the vessel so as to cover the outer end portion of the nozzle. Thus, even when the nozzle hole is opened in the subsequent process, for example, by removing the nozzle, it is possible to prevent the liquid held in the vessel from flowing to the outside of the vessel.

The built-up groove portion is formed in the liquid by digging the inner surface portion of the vessel portion in a substantially cylindrical shape in a range including at least the weld groove portion, and hence it is possible to perform build-up welding under fixed welding conditions and at a fixed distance from the axis center of the substantially cylindrical shape.

At this time, for example, when the welding is performed by rotating the welding torch, the welding of the axis center portion of the built-up groove portion is difficult to be performed or cannot be performed. However, the projecting portion of the plug is located at the axis center portion of the built-up groove portion, and hence the welding of the axis center portion need not be performed.

Then, in the inner cover process, the inner cover is attached to the inner surface portion of the vessel so as to cover the inner end portion of the nozzle and the built-up groove portion. The space surrounded by the outer cover and the inner cover is not large, and hence can be brought into a gaseous environment by purging.

Note that a welding apparatus is installed in the inside of the inner cover.

The plug, which has the substantially cylindrically-shaped projecting portion having the axis center substantially coincident with the axis center of the build-up weld portion, is inserted into the nozzle hole so that the inner end surface of the plug is substantially coincident with the outer end surface of the built-up groove portion, and then the build-sup welding is performed at the built-up groove portion. Thus, the inner end surface of the plug and the outer end surface of the built-up groove portion form a continuous surface. In other words, the nozzle hole which exists in the built-up groove portion is filled with the inner end surface of the plug, and hence no space, in which the build-up welding cannot be performed, exists in the built-up groove portion. Therefore, the build-up welding can be continuously performed without being interrupted. For example, the build-up welding can be continuously performed in such a manner that, while the welding torch is rotated about the projecting portion of the plug, the distance between the welding torch and the axis center of the plug is changed.

Thereby, the welding of the build-up weld portion can be performed automatically and efficiently, and can also be performed under the condition of a high-exposure amount.

Then, a new nozzle is inserted into the groove hole to complete the weld groove portion, and is joined to the vessel by welding. Since the inner end portion of the new nozzle is sealed and then the pipe is attached and connected to the new nozzle outside the vessel, the pipe can be connected without being influenced by the liquid held in the vessel. In this way, the nozzle can be exchanged in the state where the liquid is held in the vessel, and hence the nozzle can be easily exchanged, for example, even when damage is caused in the nuclear vessel during operation.

Note that the plug and a part of the build-up weld portion are removed when the weld groove portion on the vessel side is formed. Thus, it is preferred that the projecting portion of the plug is located on the side of the nozzle hole and away from the position of the weld groove portion. Further, it is more preferred that the projecting portion of the plug is provided on the inner side of the nozzle hole.

Further, it is preferred that, after the build-up welding process is completed, whether or not a defect exists in the build-up weld portion is checked by a non-destructive test, such as an ultrasonic flaw detection test (UT).

In the second aspect, it is preferred that the projecting portion is formed into a tapered shape and that the connecting portion between the projecting portion and the inner end surface is rounded.

With this configuration, the surface shape is changed smoothly and continuously from the inner end surface to the projecting portion, and hence occurrence of a welding defect can be suppressed. Thereby, it is possible to suppress occurrence of a welding defect in the build-up weld portion, for example, even when the projecting portion is located at the edge portion of the inner end surface.

In the second aspect, the weld groove portion may also be configured as an I-shaped groove having oblique mating surfaces.

With this configuration, the nozzle can be joined to the build-up weld portion by welding from the extending direction of the I-shaped groove, and hence automatic welding can be easily applied.

Note that, in this case, it is preferred to perform deep penetration welding that is high energy density welding, such as the laser beam welding or the electron beam welding.

In the above-described configuration, it is preferred that the I-shaped groove is formed so that, over the entire periphery of the I-shaped groove, the distance between the peripheral end portion of the I-shaped groove and the axis center of the nozzle hole is substantially fixed, and the groove angle of the I-shaped groove is also substantially fixed.

In this way, the I-shaped groove is formed so that, over the entire periphery of the I-shaped groove, the distance between the peripheral end portion of the I-shaped groove and the axis center of the nozzle hole is substantially fixed, and the groove angle of the I-shaped groove is also substantially fixed. Thus, the depth of the I-shaped groove is substantially fixed. Thereby, the energy required for the welding can be substantially fixed around the entire periphery of the I-shaped groove. Further, for example, when the welding torch is rotated around the axis center of the nozzle, the angle of the welding torch and the distance between the welding torch and the I-shaped groove need not be adjusted, and hence automatic welding can be easily applied.

A third aspect of the present invention provides a nozzle portion repair method for seal welding a J-weld portion of a nozzle portion in which a nozzle is inserted into a nozzle hole provided in a vessel portion holding a liquid therein and is joined to the vessel portion by the J-weld portion provided by welding a J-groove portion formed between the inner surface portion of the vessel portion and the nozzle, the nozzle portion repair method being performed in such a manner that the number of beads of seal welding is determined at a position of the peripheral edges of the J-weld portion, the position being most away from the nozzle, and then the entire periphery of the nozzle is welded with the determined number of beads.

For example, when damage, such as stress corrosion cracking damage, occur in the nozzle portion, or when the preventive maintenance is performed before the occurrence of the damage, for example, the seal welding using a welding material having excellent corrosion resistance is performed on the J-weld portion, so as to isolate the J-weld portion from the primary cooling water.

In the third aspect, the number of beads of the seal welding is determined at a position of the peripheral edges of the J-weld portion, which position is most away from the nozzle, and then the entire periphery of the nozzle is welded with the determined number of beads. Thus, the radial weld length can be substantially fixed around the nozzle, and the welding can be continuously performed so as to cover at least necessary portions.

Thereby, the seal welding can be performed automatically and efficiently, and can also be performed under the condition of a high-exposure amount.

In the third aspect, it is preferred that the method is configured such that, before the welding, teaching of a plurality of representative points of the weld line is performed by using the tip of the welding torch, and then the operation of the welding torch is controlled on the basis of the teaching data.

With this configuration, it is possible to move the welding torch according to the J-groove portion having a complicated three-dimensional shape.

In the above-described configuration, it is preferred that the operation control is performed in such a manner that the rotation speed of the welding torch around the nozzle is adjusted on the basis of the data so as to make the welding speed substantially fixed.

Thereby, weld beads of the same state can be formed, and hence excellent seal welding can be performed.

A fourth aspect of the present invention provides a nozzle welded structure in which, before a nozzle inserted into a nozzle hole provided in a vessel portion is joined at a weld groove portion formed between the inner surface portion of the vessel portion and the nozzle, build-up welding is performed to form a build-up weld portion around the nozzle hole of the vessel portion, the nozzle welded structure being configured such that a built-up groove portion is provided by digging the inner surface portion of the vessel portion into a substantially cylindrical shape in a range including at least the weld groove portion, and such that a plug is configured by a substantially cylindrically-shaped main body having an inner end surface forming an extending portion of the outer end surface of the built-up groove portion, and an outer diameter substantially equal to the inner diameter of the nozzle hole, and is also configured by a substantially cylindrically-shaped projecting portion projected from the inner end surface and having an axis center substantially coincident with the axis center of the build-up weld portion, and the plug is inserted into the nozzle hole so as to make the inner end surface substantially coincident with the outer end surface of the built-up groove portion.

According to the fourth aspect, the plug, which has the substantially cylindrically-shaped projecting portion having the axis center substantially coincident with the axis center of the build-up weld portion, is inserted into the nozzle hole so as to make the inner end surface of the plug substantially coincident with the outer end surface of the built-up groove portion, and then build-up welding is performed at the built-up groove portion. Thus, the inner end surface of the plug and the outer end surface of the built-up groove portion form a continuous surface. In other words, the nozzle hole, which exists in the built-up groove portion, is filled with the inner end surface of the plug, and hence no space, in which the build-up welding cannot be performed, exists in the built-up groove portion. Therefore, the build-up welding can be continuously performed without being interrupted. For example, the build-up welding can be continuously performed in such a manner that, while the welding torch is rotated about the projecting portion of the plug, the distance between the welding torch and the axis center of the projecting portion is changed.

In the built-up groove portion, the inner surface portion of the vessel portion is dug and formed into a substantially cylindrical shape in a range including at least the weld groove portion, and hence the build-up welding can be performed under fixed welding conditions and at a fixed distance from the axis center of the substantially cylindrical shape.

At this time, for example, when the welding is performed by rotating the welding torch, the welding is difficult to be performed, or cannot be performed at the axis center portion of the built-up groove portion. However, the projecting portion of the plug is located at the axis center portion, and hence the axis center portion need not be welded. Thereby, the welding of the build-up weld portion can be performed automatically and efficiently, and can also be performed under the condition of a high-exposure amount.

In the fourth aspect, it is preferred that the projecting portion is formed into a tapered shape and that the connecting portion between the projecting portion and the inner end surface is rounded.

With this configuration, the surface shape is changed smoothly and continuously from the inner end surface to the projecting portion, and hence occurrence of a welding defect can be suppressed. Thereby, it is possible to suppress occurrence of a welding defect in the build-up weld portion, for example, even when the projecting portion is located at the edge portion of the inner end surface.

{Advantageous Effects of Invention}

In the nozzle welding method according to the first aspect of the present invention, the built-up groove portion is provided by digging the inner surface portion of the vessel portion into a substantially cylindrical shape in a range including at least the weld groove portion, and the plug, which has a substantially cylindrically-shaped projecting portion having an axis center substantially coincident with the axis center of the build-up weld portion, is inserted into the nozzle hole so as to make the inner end surface of the plug substantially coincident with the outer end surface of the built-up groove portion, and then the build-up welding is performed at the built-up groove portion. Thereby, the welding of the build-up weld portion can be performed automatically and efficiently, and can also be performed under the condition of a high-exposure amount.

In the nozzle portion repair method according to the second aspect of the present invention, in addition to the effects of the first aspect, since in the pipe removing process, the inner end portion of the nozzle is sealed and then the pipe connected to the nozzle is removed outside the vessel, the pipe can be removed without being influenced by the liquid held in the vessel. Further, the outer cover is attached to the outer surface portion of the vessel so as to cover the outer end portion of the nozzle. Thus, even when the nozzle hole is opened in the subsequent process, for example, by removing the nozzle, it is possible to prevent the liquid held in the vessel from flowing to the outside of the vessel. Thereby, for example, even when damage is caused in the nuclear vessel during operation, it is possible to easily exchange the nozzle.

In the third aspect of the present invention, the number of beads of the seal welding is determined at a position of the peripheral edges of the J-weld portion, which position is most away from the nozzle, and then the entire periphery of the nozzle is welded with the determined number of beads. Thus, the seal welding can be performed automatically and efficiently, and can also be performed under the condition of a high-exposure amount.

In the nozzle welded structure according to the fourth aspect of the present invention, a built-up groove portion is provided by digging the inner surface portion of the vessel portion into a substantially cylindrical shape in a range including at least the weld groove portion, and a plug, which has a substantially cylindrically-shaped projecting portion having an axis center substantially coincident with the axis center of the build-up weld portion, is inserted into the nozzle hole so as to make the inner end surface of the plug substantially coincident with the outer end surface of the built-up groove portion, and then the build-up welding is performed at the built-up groove portion. Thus, the welding of the build-up weld portion can be performed automatically and efficiently, and can also be performed under the condition of a high-exposure amount.

{Brief Description of Drawings}

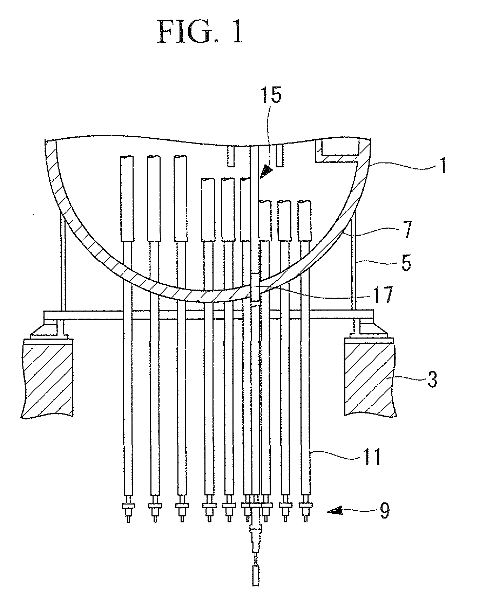

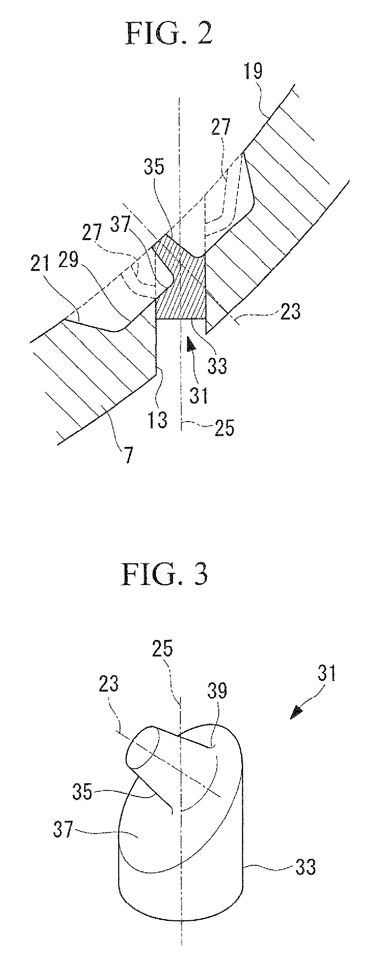

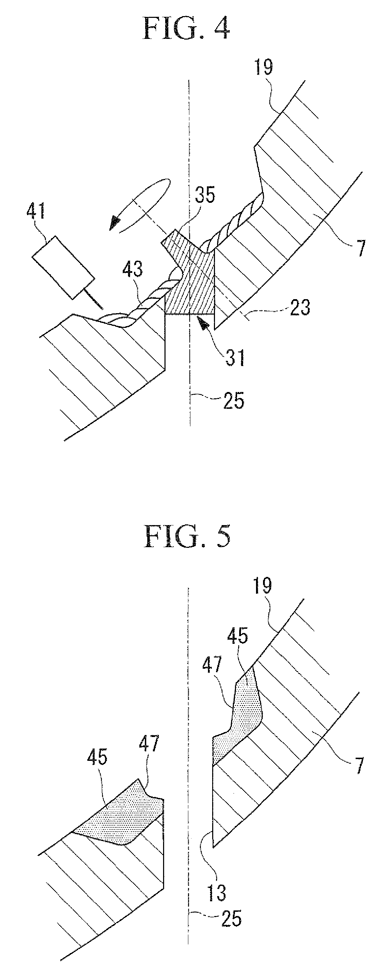

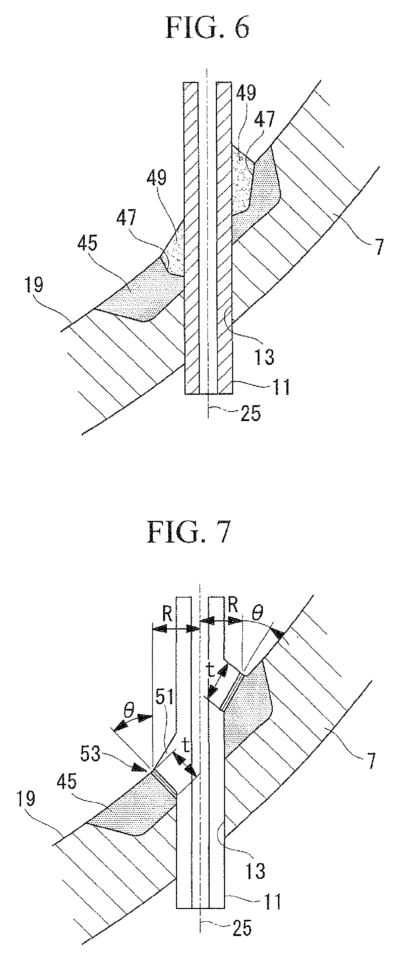

{Fig. 1} Fig. 1 is a cross-sectional view showing a lower portion and its surrounding portion of a reactor vessel of a boiling water reactor.
{Fig. 2} Fig. 2 is a cross-sectional view showing a part of a process of joining a nozzle according to a first embodiment of the present invention to a lower hemisphere portion by welding.
{Fig. 3} Fig. 3 is a perspective view showing a plug.
{Fig. 4} Fig. 4 is a cross-sectional view showing a part of the process of joining the nozzle according to the first embodiment of the present invention to the lower hemisphere portion by welding.
{Fig. 5} Fig. 5 is a cross-sectional view showing a part of the process of joining the nozzle according to the first embodiment of the present invention to the lower hemisphere portion by welding.
{Fig. 6} Fig. 6 is a cross-sectional view showing a part of the process of joining the nozzle according to the first embodiment of the present invention to the lower hemisphere portion by welding.

{Fig. 7} Fig. 7 is a cross-sectional view showing a state where a weld groove portion according to a second embodiment of the present invention is formed.

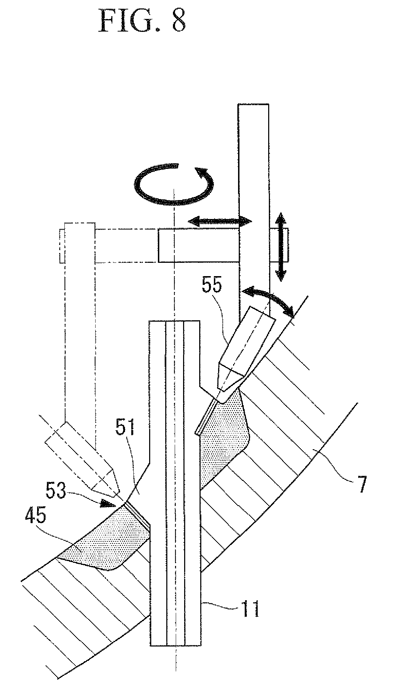

{Fig. 8} Fig. 8 is a cross-sectional view showing a state of a welding operation according to the second embodiment of the present invention.

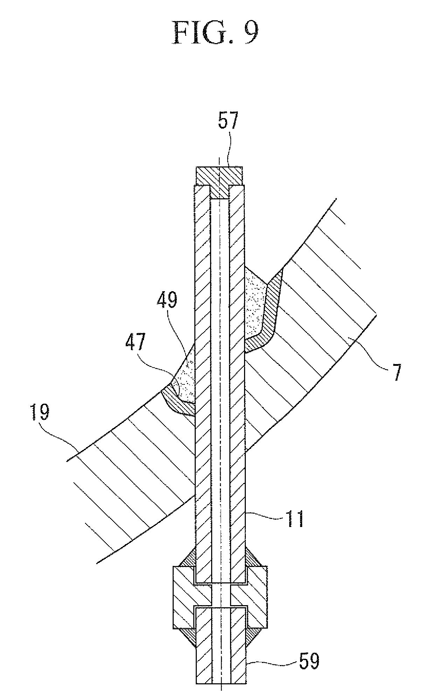

{Fig. 9} Fig. 9 is a cross-sectional view showing a part of a process of exchanging a nozzle according to a third embodiment of the present invention.

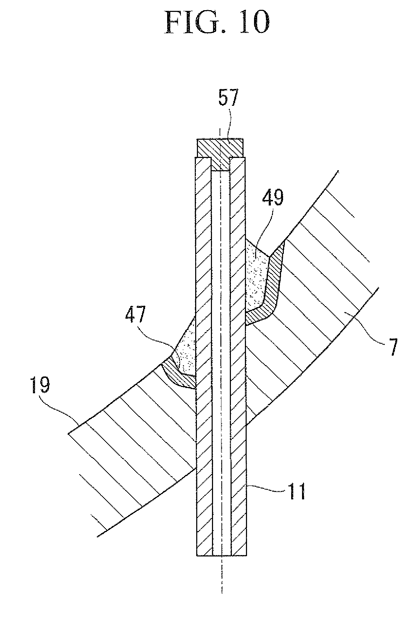

{Fig. 10} Fig. 10 is a cross-sectional view showing a part of the process of exchanging the nozzle according to the third embodiment of the present invention.

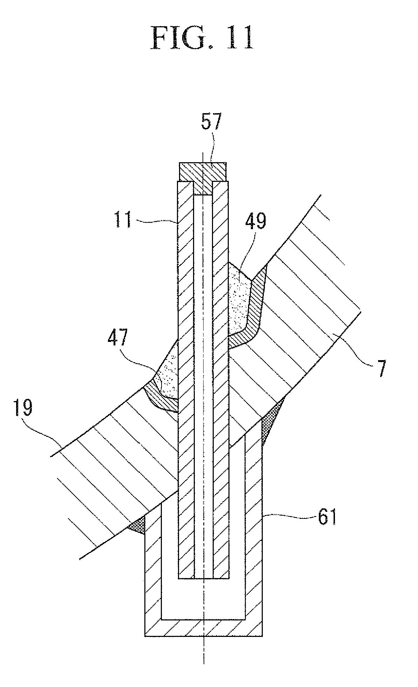

{Fig. 11} Fig. 11 is a cross-sectional view showing a part of the process of exchanging the nozzle according to the third embodiment of the present invention.

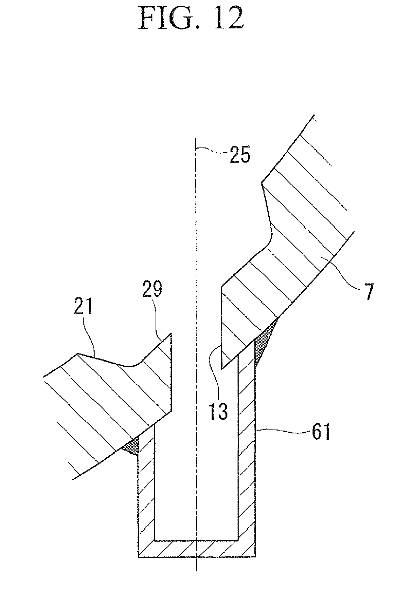

{Fig. 12} Fig. 12 is a cross-sectional view showing a part of the process of exchanging the nozzle according to the third embodiment of the present invention.

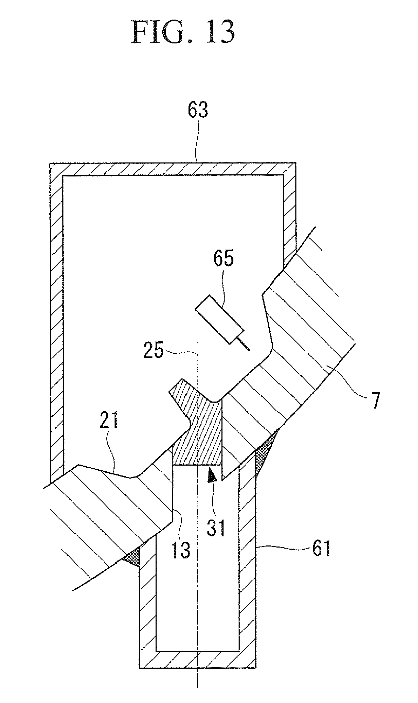

{Fig. 13} Fig. 13 is a cross-sectional view showing a part of the process of exchanging the nozzle according to the third embodiment of the present invention.

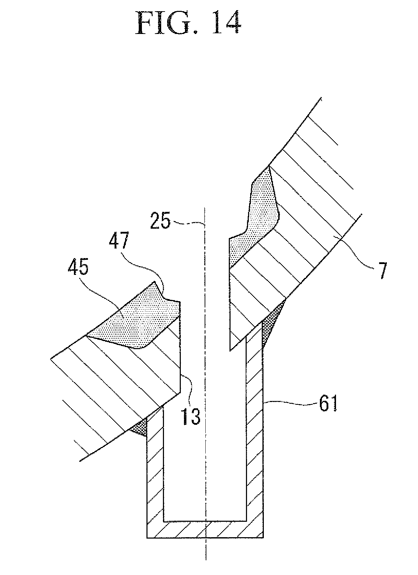

{Fig. 14} Fig. 14 is a cross-sectional view showing a part of the process of exchanging the nozzle according to the third embodiment of the present invention.

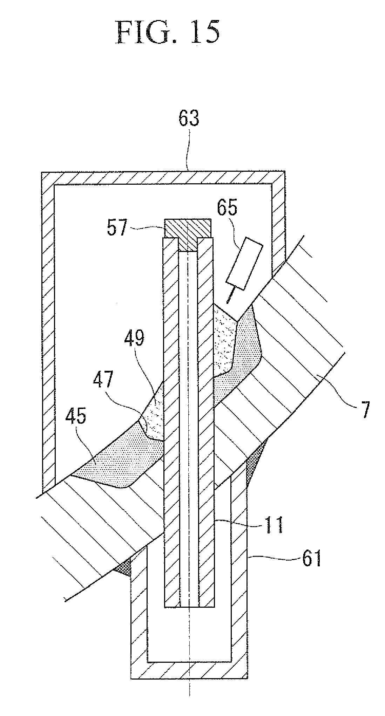

{Fig. 15} Fig. 15 is a cross-sectional view showing a part of the process of exchanging the nozzle according to the third embodiment of the present invention.

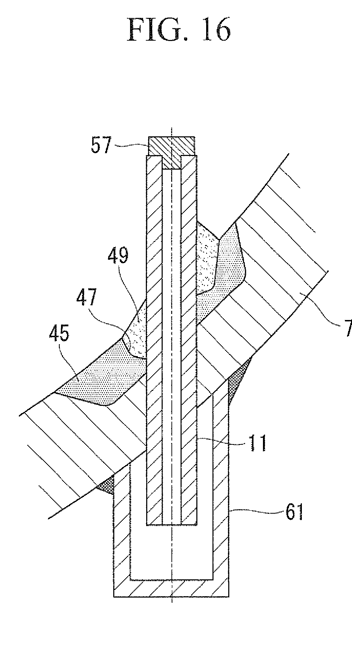

{Fig. 16} Fig. 16 is a cross-sectional view showing a part of the process of exchanging the nozzle according to the third embodiment of the present invention.

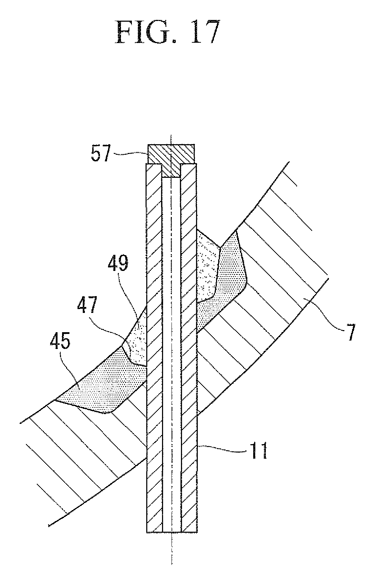

{Fig. 17} Fig. 17 is a cross-sectional view showing a part of the process of exchanging the nozzle according to the third embodiment of the present invention.

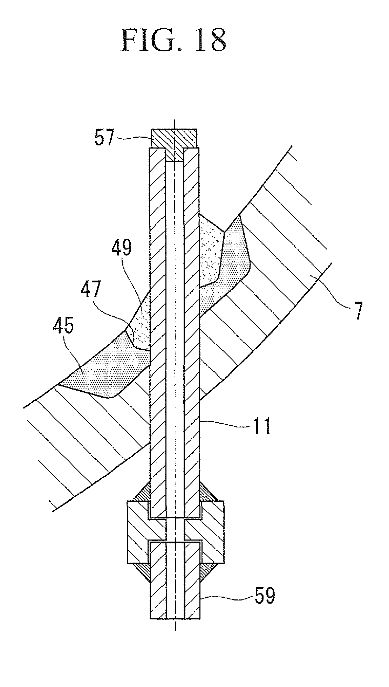

{Fig. 18} Fig. 18 is a cross-sectional view showing a part of the process of exchanging the nozzle according to the third embodiment of the present invention.

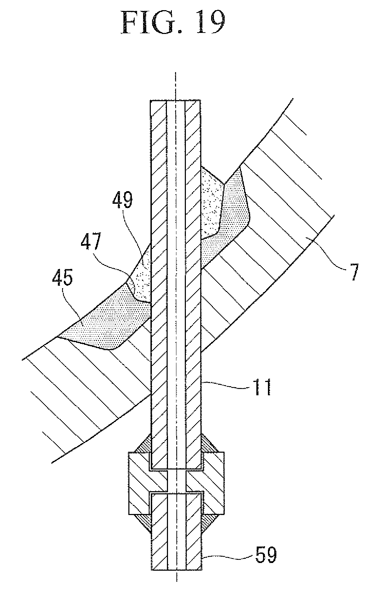

{Fig. 19} Fig. 19 is a cross-sectional view showing a part of the process of exchanging the nozzle according to the third embodiment of the present invention.

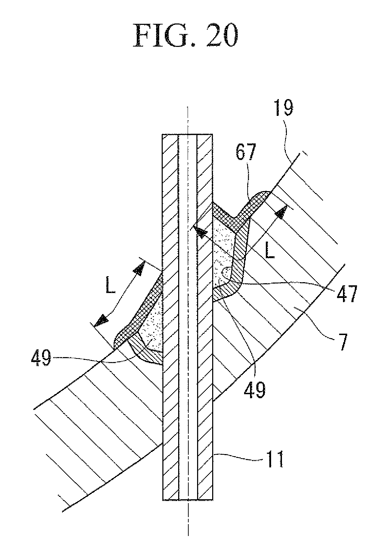

{Fig. 20} Fig. 20 is a cross-sectional view showing a state of a seal welding portion according to a fourth embodiment of the present invention.

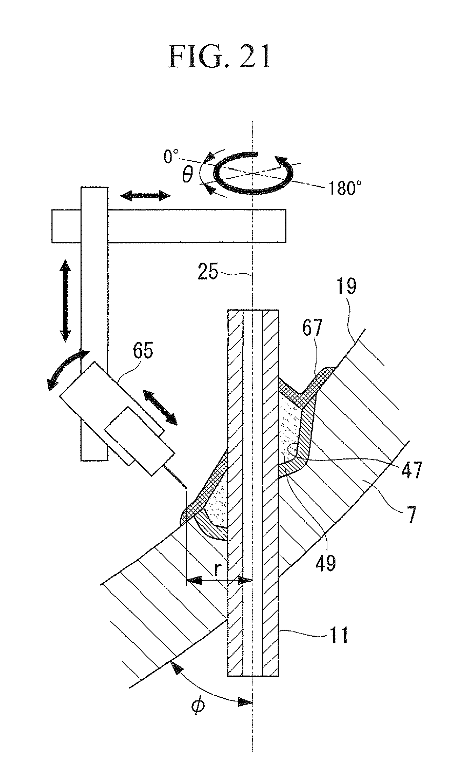

{Fig. 21} Fig. 21 is a cross-sectional view showing a state of a welding operation according to the fourth embodiment of the present invention.

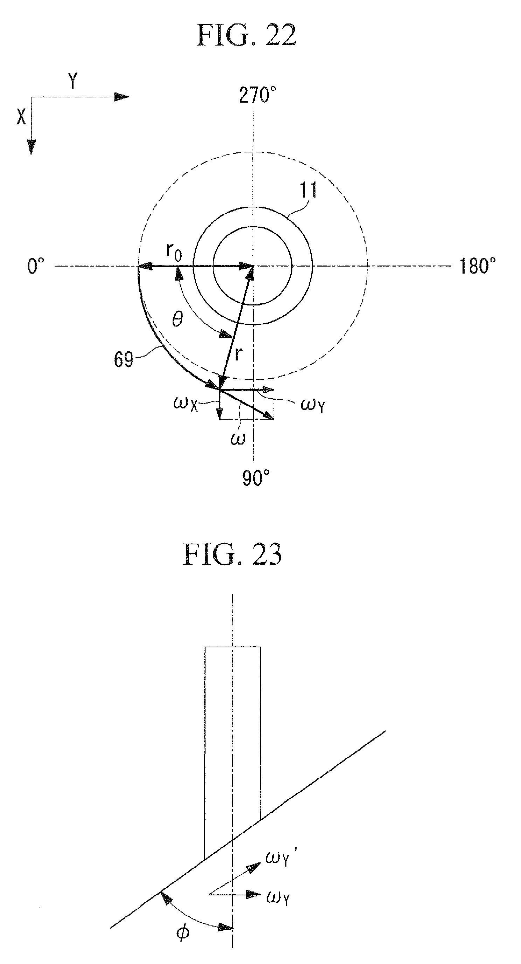

{Fig. 22} Fig. 22 is an illustration showing a relationship between the rotation speed and the welding speed according to the fourth embodiment of the present invention.

{Fig. 23} Fig. 23 is a conceptual diagram showing a change of the rotation speed due to the attachment angle.

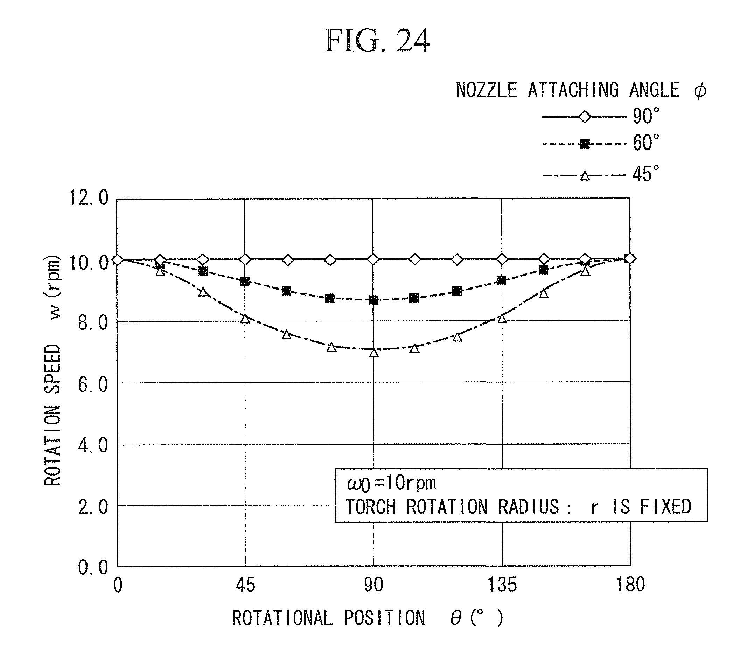

{Fig. 24} Fig. 24 is a graph showing a relationship between the rotational position and the rotation speed when the angle $\varphi$ in a simply inclined case is taken as a parameter.

{Description of Embodiments}

In the following, embodiments according to the present invention will be described with reference to the accompanying drawings.

[First embodiment]

In the following, a nozzle welding method according to a first embodiment of the present invention will be described with reference to Fig. 1 to Fig. 6.

Fig. 1 is a cross-sectional view showing a lower portion and its surrounding portion of a reactor vessel (vessel) 1 of a boiling water reactor.

The reactor vessel 1 which is a pressure vessel is supported on a support base 3 via a support skirt 5. The lower portion of the reactor vessel 1 is configured by a lower hemisphere portion (vessel portion) 7 having a substantially hemisphere shape.

In the lower hemisphere portion 7, in which a plurality of control rod drive mechanisms 9 are vertically arranged in a bristling state, a nozzle 11 for the control rod drive mechanism 9 is inserted in a nozzle hole 13 provided to penetrate through the lower hemisphere portion 7, and is fixed to the lower hemisphere portion 7 by welding.

Neutron fluxes generated in the reactor core portion (not shown) are measured and monitored by a neutron flux detector 15 suitably arranged between the plurality of control rod drive mechanisms 9. Thereby, the output of the nuclear reactor is displayed, and the burn-up in the nuclear reactor is evaluated. The neutron flux detector 15 is led to the outside by a neutron flux detector nozzle (nozzle) 17 welded and joined to the inner side of the vessel in the lower hemisphere portion 7.

The nozzle 11 for the control rod drive mechanism 9, and the neutron flux detector nozzle 17 are made of stainless steel or a Ni-based alloy, and damage, such as stress corrosion cracking, may occur in the welding portion between the nozzle and the reactor vessel depending on an environment.

When the damage is aggravated and enlarged, the reactor water in the reactor vessel 1 may leak to the outside of the reactor vessel 1. Thus, the leak is continuously monitored by various detectors, and also detected at the time of periodic inspection, and the like. When the leak is detected, a measure to prevent the leak is taken.

In the following, a nozzle welding method according to the present embodiment will be described. The neutron flux detector nozzle 17 can also be welded by the same method.

Fig. 2, Fig. 4, Fig. 5, and Fig. 6 show in order the process of joining the nozzle 11 to the lower hemisphere portion 7 by welding.

In a built-up groove forming process, a built-up groove portion 21 which is a disk-shaped recessed portion is formed in a portion of the inner surface 19 of the lower hemisphere portion 7.

The built-up groove portion 21 is formed into a shape axially symmetrical with respect to the axis center 23 thereof. In other words, the built-up groove portion 21 is formed into a substantially cylindrical shape by digging the inner surface 19 toward the outer side. The axis center 23 is coincident with the normal of the inner surface 19, and crosses the axis center 25 of the nozzle hole 13 in the thickness portion of the lower hemisphere portion 7.

The built-up groove portion 21 is formed in a range including at least a J-groove (weld groove portion) 27.

The outer surface (outer end surface) 29 of the built-up groove portion 21 is formed into a circular shape, that is a doughnut shape, having a space corresponding to the portion of the nozzle hole 13.

Next, a build-up welding process is performed. First, a plug 31 is inserted into the nozzle hole 13.

Fig. 3 is a perspective view showing the plug 31.

The plug 31 is configured by a plug main body portion (main body) 33 and a projecting portion 35. The plug main body portion 33 is formed into a substantially cylindrical shape having an outer diameter substantially equal to the inner diameter of the nozzle hole 13. The inner end surface 37 of the plug main body portion 33, which inner end surface is located on the side of the inner surface 19 when the plug 31 is inserted into the nozzle hole 13, is formed into a shape forming the extended portion of the outer surface 29 of the built-up groove portion 21. In other words, the plug main body portion 33 is formed into a cylindrical shape formed by obliquely cutting one end portion of the plug main body portion 33.

The projecting portion 35 is projected from the inner end surface 37, and is formed into a substantially cylindrical shape having the axis center 23 substantially coincident with the axis center of the built-up groove portion 21. Specifically, the projecting portion 35 has a truncated cone shape (that is, tapered shape) with a large inclination angle (close to 90°), and an R portion 39 is formed at the connecting portion between the projecting portion 35 and the inner end surface 37. As shown in Fig. 2, the plug 31 is inserted into the nozzle hole 13 at a position where the inner end surface 37 is substantially coincident with the outer surface 29 of the built-up groove portion 21.

Therefore, the inner end surface 37 of the plug 31 and the outer end surface of the built-up groove portion 21 form a continuous surface. In other words, the space of the nozzle hole 13, which exists in the outer surface 29 of the built-up groove portion 21, is filled with the inner end surface 37 of the plug 31, so as to be formed as a continuous surface.

Then, build-up welding is performed to fill the built-up groove portion 21 by a weld bead 43 formed in such a manner that, while a welding torch 41 is rotated about the projecting portion 35 of the plug 31, the distance between the welding torch 41 and the axis center 23 is changed.

At this time, the outer surface 29 of the built-up groove portion 21 and the inner end surface 37 of the plug 31 form a continuous surface, and hence the build-up welding can be continuously performed.

The built-up groove portion 21 is formed, by digging the inner surface 19 of the lower hemisphere portion 7, into a substantially cylindrical shape in a range including at least the weld groove portion, and hence the build-up welding can be performed under fixed welding conditions and at a fixed distance from the axis center of the substantially cylindrical shape.

At this time, the welding is difficult to be performed or cannot be performed in the portion close to the axis center 23 of the built-up groove portion 21. However, the projecting portion 35 of the plug 31 is located in the portion close to the axis center 23, and hence the welding need not be performed in the portion.

Thereby, the welding of a build-up weld portion 45 can be performed automatically and efficiently, and can also be performed under the condition of a high-exposure amount.

Further, because the R portion 39 and the inclination of the projecting portion 35 are provide, the surface shape from the inner end surface 37 to the projecting portion 35 is changed smoothly and continuously, and hence it is possible to prevent occurrence of a weld failure in this portion. Thereby, for example, even when the projecting portion 35 is located at the edge portion of the inner end surface 37 as shown in Fig. 2, it is possible to prevent occurrence of a weld failure in the build-up weld portion 45 formed by the weld bead 43.

Note that it is preferred that, after the build-up welding process is completed, whether or not a defect exists in the build-up weld portion is checked by a non-destructive test, such as an ultrasonic flaw detection test (UT).

Next, a vessel side weld groove portion forming process is performed. As shown in Fig. 5, the plug 31 and a part of the build-up weld portion 45 are removed, and a J-groove 47 (vessel side weld groove portion) on the side of the lower hemisphere portion 7 is formed in the build-up weld portion 45.
In this way, since the plug 31 is removed at the time of forming the J-groove 47, it is preferred that the projecting portion 35 of the plug 31 is located on the side of the nozzle hole 13 and away from the position of the J-groove 47. It is more preferred that the projecting portion 35 is located on the inner side of the nozzle hole 13.
Then, the nozzle 11 is inserted into the nozzle hole 13, and welding is performed between the J-groove 47 and the nozzle 11 to form a J-weld portion 49, so that the nozzle 11 is joined to the lower hemisphere portion 7.

[Second embodiment]

Next, a nozzle welding method according to a second embodiment of the present invention will be described with reference to Fig. 7 and Fig. 8.
The present embodiment is different from the first embodiment in the configuration of the weld groove portion at the time of joining the nozzle 11 by welding. Here, the portions different from the first embodiment will be mainly described, and the duplicate description of the same portions as those of the first embodiment will be omitted.
Note that the same members as those of the first embodiment are denoted by the same reference numerals.
Fig. 7 shows a state where a weld groove portion is formed. Fig. 8 shows a state of welding operation.
In the present embodiment, a collar 51 which is a saddle-shaped projecting portion is formed at the nozzle 11, and thereby a part of the build-up weld portion 45 is raised toward the inner side from the inner surface 19. Thereby, when the nozzle 11 is inserted into the nozzle hole 13 from the inner side, an I-shaped groove 53 having oblique mating surfaces with no gap is formed between the collar 51 and the build-up weld portion 45. The I-shaped groove 53 is formed so that, over the entire periphery of the I-shaped groove 53, the distance R between the peripheral end portion of the I-shaped groove 53 and the axis center 25 of the nozzle hole 13 is substantially fixed, and the groove angle $\theta$ of the I-shaped groove 53 is also substantially fixed. Therefore, the depth t of the I-shaped groove 53 is substantially fixed.
As a welding torch 55, a laser beam or an electron beam, which has high energy density, is used. The welding torch 55 is configured such that it can be rotated about the axis center 25 and moved in the radial direction, and also can be moved and inclined in the vertical direction.
As shown in Fig. 8, the welding torch 55 irradiates a beam from the extending direction of the I-shaped groove 53, so that the nozzle 11 and the build-up weld portion 45 are welded and joined to each other.
At this time, the depth t of the I-shaped groove 53 is substantially fixed, and hence the energy required for the welding can be substantially fixed over the entire periphery of the I-shaped groove 53.
Further, the distance R is fixed, and hence the radial position of the welding torch 55 need not be adjusted. The groove angle $\theta$ is substantially fixed, and hence the inclination of the welding torch 55 need not be adjusted.
Therefore, automatic welding can be easily applied.

[Third embodiment]

Next, a nozzle portion repair method according to a third embodiment of the present invention will be described with reference to Fig. 9 to Fig. 19.
In the present embodiment, the nozzle 11 is exchanged in the state where water (liquid) is held in the reactor vessel 1 during operation of the reactor vessel 1. When the nozzle 11 is newly attached also in the present embodiment, a part of the processes are performed similarly to those of the first embodiment described above, and hence the duplicate description of the processes similar to those of the first embodiment will be omitted.
Note that the same members as those of the first embodiment are denoted by the same reference numerals.
Fig. 9 to Fig. 19 show in order the processes of exchanging the nozzle 11.
In a pipe removing process, as shown in Fig. 9, a cap 57 is attached to the inner end portion of the nozzle 11 so as to seal the inner end portion. In this state, a pipe 59 connected to the outer end of the nozzle 11 is removed. Fig. 10 shows the state where the pipe 59 is removed.
In this way, the pipe 59 is removed in the state where the inner end portion of the nozzle 11 is sealed, the pipe 59 can be removed without being influenced by the water held in the reactor vessel 1.
Then, as shown in Fig. 11, an outer cover 61 is attached to the outer surface portion of the lower hemisphere portion 7 so as to cover the outer end portion of the nozzle 11 (outer cover process).
The outer cover 61 can prevents the water held in the reactor vessel 1 from flowing outside, for example, even when the nozzle hole 13 is opened by removing the nozzle 11.
Then, as shown in Fig. 12, the built-up groove portion 21 is formed similarly to the first embodiment (built-up groove forming process).
Then, as shown in Fig. 13, an inner cover 63 is attached to the inner surface portion of the lower hemisphere portion 7 so as to cover the inner end portion of the nozzle 11 and the built-up groove portion 21, and the inside of the inner cover 63 is brought into a gaseous environment (inner cover process).

The space surrounded by the outer cover 61 and the inner cover 63 is not large, and hence can be easily brought into a gaseous environment by purging.

Note that a welding apparatus including a welding torch 65 and a mechanism for driving the welding torch 65 is provided in the inside of the inner cover 63.

Then, the plug 31 is arranged, and the build-up weld portion 45 is formed in the built-up groove portion 21 by build-up welding using the welding torch 65 substantially similarly to the first embodiment (build-up welding process).

Then, as shown in Fig. 14, in the state where the inner cover 63 is removed, substantially similarly to the first embodiment, the plug 31 and a part of the build-up weld portion 45 are removed, and the J-groove 47 on the side of the lower hemisphere portion 7 is formed in the build-up weld portion 45 (vessel side weld groove portion forming process).

Then, as shown in Fig. 15, a new nozzle (newly arranged nozzle) 11 is inserted into the nozzle hole 13, and the inner cover 63 is attached, and the inside of the inner cover 63 is brought into the gaseous environment. Further, substantially similarly to the first embodiment, the J-weld portion 49 is formed by welding between the J-groove 47 and the nozzle 11 by using the welding torch 65, so that the nozzle 11 is joined to the lower hemisphere portion 7 (nozzle attaching process).

Then, the pipe attaching process, in which the inner end portion of the nozzle 11 is sealed, and in which the pipe 59 is attached and connected to the nozzle 11 outside the vessel, is performed.

As shown in Fig. 16, the inner cover 63 is removed, and the cap 57 is attached to the inner end portion of the nozzle 11. As shown in Fig. 17, the outer cover 61 is removed. As shown in Fig. 18, the pipe 59 is joined to the outer end of the nozzle 11. As shown in Fig. 19, the cap 57 is removed from the nozzle 11. In this way, even when the outer cover 61 is removed, the nozzle 11 is sealed by the cap 57, and hence the pipe 59 can be connected without being influenced by the water held in the reactor vessel 1.

Thereby, the exchange of the nozzle 11 is completed.

In this way, the nozzle 11 can be exchanged in the state where water is held in the reactor vessel 1, and hence the nozzle 11 can be easily exchanged, for example, even when damage is caused during operation of the reactor vessel 1,


[Fourth embodiment]

Next, a nozzle portion repair method according to a fourth embodiment of the present invention will be described with reference to Fig. 20 to Fig. 24.

The present embodiment is a nozzle portion repair method for seal welding the J-weld portion 49 of the nozzle portion in which the nozzle 11 is joined to the lower hemisphere portion 7 by the J-weld portion 49. This nozzle portion repair method is used in the case where, when damage, such as, for example, damage of stress corrosion cracking, occurs, or when preventive maintenance is performed before the occurrence of damage, the nozzle portion is covered with a weld metal having excellent corrosion resistance so as to be isolated from the primary cooling water.

Note that the duplicate description of the same portions as those of the first embodiment will be omitted, and the same members as those of the first embodiment are denoted by the same reference numerals.

Fig. 20 shows the state of a seal weld portion 67 seal welded by the nozzle portion repair method of the present embodiment. Fig. 21 shows the state of the welding operation.

The surface shape of the J-weld portion 49 is a three-dimensional saddle shape, and the surface width which is the radial length is different in the peripheral direction.

In the present embodiment, the number of beads of the seal welding is determined at the position of the peripheral edges of the J-weld portion 49, which position is most away from the nozzle 11, that is, at which position the surface width is largest, and then the entire periphery of the nozzle is welded with the determined number of beads by using the welding torch 65.

The welding torch 65 is configured to access to the weld portion from above the nozzle 11 in order to avoid interference with the nozzle 11. The welding torch 65 has a so-called five-axis structure in which the weld torch 65 can be rotated about the axis center 25, and moved in the radial direction and in the vertical direction, and can be inclined and moved in the axis direction of the welding torch 65.

In the seal welding, before the welding, teaching of representative points of the weld line is performed by using the tip of the welding torch 65, and then the welding is performed while the welding torch 65 is moved along the trajectory of the saddle shape by playback control.

At this time, the operation control of the welding torch 65 is performed in such a manner that, on the basis of the data obtained by the teaching, the rotation speed of the welding torch 65 around the nozzle 11 is adjusted so as to make the welding speed substantially fixed.

The relationship between the rotation speed and the welding speed will be described with reference to Fig. 22 to Fig. 24.

As shown in Fig. 22, it is assumed that the welding torch 65 is rotated counter clockwise around the nozzle 11 from the position of 0°.

When the reference welding speed at the position of 0° is set as $v_0$, and when the torch rotation radius is set as $r_0$, the reference rotation speed $\omega_0$ in this case is expressed as $\omega_0 = v_0 / 2\pi r_0$ (rpm).

The rotation speed $\omega$ is calculated so that the welding speed at an arbitrary position (rotational angle $\theta$) becomes $v_0$.

When the torch rotation radius at an arbitrary position is sets as r, the rotation speed $\omega$ is calculated as follows.

{Expression 1}

$$\omega = \omega_0 \times (r_0 / r) / \sqrt{((COS(\theta))^2 + (SIN(\theta)/SIN(\phi))^2)}$$

The numerator of ($r_0$/r) is a correction factor for correcting the rotation speed in the peripheral direction based on the difference of the rotation radius of the welding torch 65. Further, the rotation speed is inversely proportional to the rotation radius.

The denominator of $\sqrt{((COS(\theta))^2 + (SIN(\theta)/SIN((\phi))^2)}$ will be described.

When the rotation speed: $\omega$ at the welding position $\theta$ is decomposed into an X direction component: $\omega_X$ (on the surface without inclination) and a Y direction component: $\omega_Y$ (on the surface with inclination), the components are expressed as follows.

{Expression 2}

$$\omega_X = \omega_0 \times COS(\theta)$$

$$\omega_Y = \omega_0 \times SIN(\theta)$$

Since the welding surface is inclined at an angles $\phi$ as shown in Fig. 23, the Y direction component $\omega_Y$ is increased by a factor of 1 / SIN ($\phi$) to become $\omega_Y$'.

Therefore, the rotation speed $\omega$ at the welding position of the angle $\theta$ is given by the following expression.

{Expression 3}

$$\omega = \sqrt{\left(\omega_X^2 + \omega_Y'^2\right)}$$

$$= \sqrt{\left(\omega_X^2 + (\omega_Y / SIN(\phi))^2\right)}$$

$$= \sqrt{((COS(\theta))^2 + (SIN(\theta)/SIN(\phi))^2)}$$

The welding speed can be made substantially fixed in such a manner that the rotation speed at each position is calculated by this expression, and that the rotation speed is controlled to become the calculated value.

Fig. 24 shows a relationship between the rotational position and the rotation speed in the case where, when the welding surface is simply inclined, the angle φ is set as a parameter.

In this way, the number of beads of seal welding is determined at the position of the peripheral edges of the J-weld portion 49, which position is most away from the nozzle 11, and then the entire periphery of the nozzle 11 is welded with the determined number of beads. Thus, the welding length L in the radial direction can be substantially fixed around the nozzle 11, and the welding can be continuously performed by covering at least necessary portions.

Thereby, the seal welding can be performed automatically and efficiently, and can also be performed under the condition of a high-exposure amount.

Further, the seal welding can be performed so that the welding speed is substantially fixed, and hence beads of the same state can be formed.

Thereby, the excellent seal weld portion 67 can be formed.

Note that the present invention is not limited to each of the above-described embodiments, and various modifications and variations are possible within the scope and spirit of the present invention.

{Reference Signs List}

| | |
|---|---|
| 1 | Reactor vessel |
| 7 | Lower hemisphere portion |
| 11 | Nozzle |
| 13 | Nozzle hole |
| 19 | Inner surface |
| 21 | Built-up groove portion |
| 27 | J-groove |
| 31 | Plug |
| 33 | Plug main body portion |
| 35 | Projecting portion |
| 39 | R portion |
| 53 | I-shaped groove |
| 57 | Cap |
| 61 | Outer cover |
| 63 | Inner cover |

**Claims**

1. A nozzle welding method in which a nozzle inserted into a nozzle hole provided in a vessel portion is joined to the vessel portion by welding a weld groove portion formed between the inner surface portion of the vessel portion and the nozzle, the nozzle welding method comprising:

a built-up groove forming process of forming a built-up groove portion by digging the inner surface portion of the vessel portion into a substantially cylindrical shape in a range including at least the weld groove portion;
a build-up welding process of forming a built-up weld portion in the built-up groove portion by build-up welding in such a manner that a plug is configured by a substantially cylindrically-shaped main body having an inner end surface forming an extending portion of the outer end surface of the built-up groove portion, and an outer diameter substantially equal to the inner diameter of the nozzle hole, and is also configured by a substantially cylindrically-shaped projecting portion projected from the inner end surface and having an axis center substantially coincident with the axis center of the build-up weld portion, and the plug is inserted into the nozzle hole so as to make the inner end surface substantially coincident with the outer end surface of the built-up groove portion;
a vessel side weld groove portion forming process of forming, in the build-up weld portion, the weld groove portion on the side of the vessel; and
a nozzle attaching process of completing the weld groove portion by inserting the nozzle and welding the weld groove portion.

**2.** The nozzle welding method according to claim 1, wherein the projecting portion is formed into a tapered shape and the connecting portion between the projecting portion and the inner end surface is rounded.

**3.** The nozzle welding method according to claim 1 or claim 2, wherein the weld groove portion is formed to be an I-shaped groove having oblique mating surfaces.

**4.** The nozzle welding method according to claim 3, wherein, over the entire periphery of the I-shaped groove, the distance between the peripheral end portion of the I-shaped groove and the axis center of the nozzle hole is substantially fixed, and the groove angle of the I-shaped groove is substantially fixed.

**5.** A nozzle portion repair method for exchanging a nozzle in a nozzle portion in which the nozzle is inserted into a nozzle hole provided in a vessel portion holding a liquid therein and is joined to the vessel portion by welding a weld groove portion formed between the inner surface portion of the vessel portion and the nozzle, the nozzle portion repair method comprising:

a pipe removing process of sealing the inner end portion of the nozzle and removing a pipe connected to the nozzle outside the vessel;

an outer cover process of attaching an outer cover to the outer surface portion of the vessel so as to cover the outer end portion of the nozzle;

a built-up groove forming process of removing the nozzle and forming a built-up groove portion by digging the inner surface portion of the vessel portion in a substantially cylindrical shape in a range including at least the weld groove portion;

an inner cover process of attaching an inner cover to the inner surface portion of the vessel so as to cover the inner end portion of the nozzle and the built-up groove portion, and bringing the inside of the inner cover into a gaseous environment;

a build-up welding process of forming a built-up weld portion in the built-up groove portion by build-up welding in such a manner that a plug is configured by a substantially cylindrically-shaped main body having an inner end surface forming an extending portion of the outer end surface of the built-up groove portion, and an outer diameter substantially equal to the inner diameter of the nozzle hole, and is configured by a substantially cylindrically-shaped projecting portion projected from the inner end surface and having an axis center substantially coincident with the axis center of the build-up weld portion, and the plug is inserted into the nozzle hole so as to make the inner end surface substantially coincident with the outer end surface of the built-up groove portion;

a vessel side weld groove portion forming process of forming, in the build-up weld portion, the weld groove portion on the side of the vessel;

a nozzle attaching process of completing the weld groove portion by inserting a newly attached nozzle and welding the weld groove portion; and

a pipe attaching process of sealing the inner end portion of the newly attached nozzle, and attaching and connecting a pipe to the newly attached nozzle outside the vessel.

**6.** The nozzle portion repair method according to claim 5, wherein the projecting portion is formed into a tapered shape and the connecting portion between the projecting portion and the inner end surface is rounded.

**7.** The nozzle portion repair method according to claim 5 or claim 6, wherein the weld groove portion is formed to be an I-shaped groove having oblique mating surfaces.

**8.** The nozzle portion repair method according to claim 7, wherein, over the entire periphery of the I-shaped groove, the distance between the peripheral end portion of the I-shaped groove and the axis center of the nozzle hole is substantially fixed, and also the groove angle of the I-shaped groove is substantially fixed.

**9.** A nozzle portion repair method for seal welding a J-weld portion of a nozzle portion in which a nozzle is inserted into a nozzle hole provided in a vessel portion holding a liquid therein and is joined to the vessel portion by the J-weld portion provided by welding a J-groove portion formed between the inner surface portion of the vessel portion and the nozzle,

wherein the number of beads of the seal welding is determined at a position of the peripheral edges of the J-weld portion, the position being most away from the nozzle, and

wherein the entire periphery around the nozzle is welded with the determined number of beads.

**10.** The nozzle portion repair method according to claim 9, wherein, before the welding, teaching of a plurality of representative points of the weld line is performed by using the tip of a welding torch, and wherein the operation of the welding torch is controlled on the basis of the teaching data.

**11.** The nozzle portion repair method according to claim 10, wherein the operation control is performed in such a manner that the rotation speed of the welding torch around the nozzle is adjusted on the basis of the data so as to make the welding speed substantially fixed.

**12.** A nozzle welded structure in which, before a nozzle inserted into a nozzle hole provided in a vessel portion is joined at a weld groove portion formed between the inner surface portion of the vessel portion and the nozzle, build-up welding is performed to form a build-up weld portion around the nozzle hole of the vessel portion,
wherein a built-up groove portion is provided by digging the inner surface portion of the vessel portion into a substantially cylindrical shape in a range including at least the weld groove portion, and
wherein a plug is configured by a substantially cylindrically-shaped main body having an inner end surface forming an extending portion of the outer end surface of the built-up groove portion, and an outer diameter substantially equal to the inner diameter of the nozzle hole, and is configured by a substantially cylindrically-shaped projecting portion projected from the inner end surface and having an axis center substantially coincident with the axis center of the build-up weld portion, and the plug is inserted into the nozzle hole so as to make the inner end surface substantially coincident with the outer end surface of the built-up groove portion.

**13.** The nozzle welded structure according to claim 12, wherein the projecting portion is formed into a tapered shape and the connecting portion between the projecting portion and the inner end surface is rounded.

# FIG. 1

## FIG. 2

## FIG. 3

# FIG. 4

# FIG. 5

# FIG. 6

# FIG. 7

FIG. 8

FIG. 9

FIG. 10

FIG. 11

FIG. 12

# FIG. 13

FIG. 14

## FIG. 15

FIG. 16

FIG. 17

FIG. 18

# FIG. 19

FIG. 20

FIG. 21

# FIG. 22

# FIG. 23

# FIG. 24

NOZZLE ATTACHING ANGLE $\phi$

—◇— 90°

----■---- 60°

—·-△-·— 45°

$\omega_0 = 10$rpm
TORCH ROTATION RADIUS : r IS FIXED

ROTATION SPEED w (rpm) vs ROTATIONAL POSITION $\theta$ (°)

**INTERNATIONAL SEARCH REPORT**

| International application No. |
|---|
| PCT/JP2010/059872 |

A. CLASSIFICATION OF SUBJECT MATTER
*B23K31/00*(2006.01)i, *B23K9/00*(2006.01)i, *B23K9/028*(2006.01)i, *B23K9/04*
(2006.01)i, *B23K9/095*(2006.01)i, *B23K33/00*(2006.01)i, *G21C13/00*(2006.01)i,
*G21C19/02*(2006.01)i

According to International Patent Classification (IPC) or to both national classification and IPC

B. FIELDS SEARCHED

Minimum documentation searched (classification system followed by classification symbols)
B23K31/00, B23K9/00, B23K9/028, B23K9/04, B23K9/095, B23K33/00, G21C13/00,
G21C19/02

Documentation searched other than minimum documentation to the extent that such documents are included in the fields searched
Jitsuyo Shinan Koho          1922–1996   Jitsuyo Shinan Toroku Koho   1996–2010
Kokai Jitsuyo Shinan Koho    1971–2010   Toroku Jitsuyo Shinan Koho   1994–2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2005-219125 A  (Framatome ANP),<br>18 August 2005 (18.08.2005),<br>entire text; all drawings<br>& US 2005/0205527 A1     & FR 2866149 A<br>& KR 10-2006-0041774 A   & CN 1663726 A | 9-11<br>1-8,12,13 |
| Y<br>A | JP 2002-307166 A  (Mitsubishi Heavy Industries,<br>Ltd.),<br>22 October 2002 (22.10.2002),<br>entire text; all drawings<br>(Family: none) | 9-11<br>1-8,12,13 |
| A | JP 2007-232457 A  (Mitsubishi Heavy Industries,<br>Ltd.),<br>13 September 2007 (13.09.2007),<br>entire text; all drawings<br>(Family: none) | 1-8,12,13 |

| ☒ Further documents are listed in the continuation of Box C. | ☐ See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>    09 August, 2010 (09.08.10) | Date of mailing of the international search report<br>    24 August, 2010 (24.08.10) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| | International application No. |
|---|---|
| | PCT/JP2010/059872 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 3-291167 A  (Ishikawajima-Harima Heavy Industries Co., Ltd.), 20 December 1991 (20.12.1991), entire text; all drawings (Family: none) | 1-8,12,13 |
| A | JP 2-102492 A  (Toshiba Corp.), 16 April 1990 (16.04.1990), entire text; all drawings (Family: none) | 1-8,12,13 |
| A | JP 2005-219124 A  (Framatome ANP), 18 August 2005 (18.08.2005), entire text; all drawings & US 2005/0220249 A1    & FR 2866148 A & KR 10-2006-0041775 A   & CN 1664430 A | 1-8,12,13 |

Form PCT/ISA/210 (continuation of second sheet) (July 2009)

## INTERNATIONAL SEARCH REPORT

International application No.

PCT/JP2010/059872

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III     Observations where unity of invention is lacking (Continuation of item 3 of first sheet)**

This International Searching Authority found multiple inventions in this international application, as follows:
  See extra sheet.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

| **INTERNATIONAL SEARCH REPORT** | International application No. |
|---|---|
| | PCT/JP2010/059872 |

<u>Continuation of Box No.III of continuation of first sheet(2)</u>

The inventions in claims 1-8, 12, 13 and the inventions in claims 9-11 have no same or corresponding special technical features. The following two inventions (groups) are contained in the claims.

(Invention 1) The inventions in claims 1-8, 12, 13

A nozzle welding method, a nozzle part repairing method, and a nozzle welded structure, which are provided with forming an overlay groove by digging the inner surface of a vessel into an approximately cylindrical shape within a region including at least a welding groove, and inserting a plug, which comprises an approximately columnar main body having an inner end surface that forms an extension of the outer end surface of the overlay groove and having an outer diameter approximately equal to the inner diameter of an nozzle hole and an approximately columnar protrusion protruding from the inner end surface and having an axis center approximately the same as that of the overly groove, into the nozzle hole such that the inner end surface and the outer end surface of the overlay groove substantially match each other.

(Invention 2) The inventions in claims 9-11

A nozzle part repairing method for seal welding a J-weld section of a nozzle part in which a nozzle is inserted into a nozzle hole provided in a vessel that holds liquid and the nozzle is joined to the vessel by the J-weld section to which a J groove formed between the inner surface of the vessel and the nozzle is welded, wherein the number of beads in seal welding is determined at a position most distant from the nozzle of the peripheral edge of the J-weld section, and welding is performed all around the nozzle with the determined number of beads.

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI2102492 B

- JP 2007232457 A